(19) **Europäisches Patentamt**
**European Patent Office**
**Office européen des brevets**

(11) **EP 2 521 237 B1**

(12) **EUROPEAN PATENT SPECIFICATION**

(45) Date of publication and mention
of the grant of the patent:
**30.04.2014 Bulletin 2014/18**

(51) Int Cl.:
***H02J 3/18*** (2006.01)

(21) Application number: **12166232.4**

(22) Date of filing: **30.04.2012**

(54) **Systems, methods, and apparatus for integrated volt/VAR control in power distribution networks**

Systeme, Verfahren und Vorrichtung zur integrierten Volt/VAR-Steuerung in
Leistungsverteilungsnetzwerken

Systèmes, procédés et appareil pour le contrôle volt/VAR coordonné dans les réseaux de distribution
d'énergie

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.05.2011 US 201113100015**

(43) Date of publication of application:
**07.11.2012 Bulletin 2012/45**

(73) Proprietor: **General Electric Company
Schenectady, NY 12345 (US)**

(72) Inventors:
• **Krok, Michael Joseph
Niskayuna, NY 12309 (US)**

• **Ren, Wei
Niskayuna, NY 12309 (US)**
• **Genc, Sahika
Niskayuna, NY 12309 (US)**

(74) Representative: **Picker, Madeline Margaret
GPO Europe
GE International Inc.
The Ark
201 Talgarth Road
Hammersmith
London W6 8BJ (GB)**

(56) References cited:
**US-A1- 2010 198 422    US-A1- 2011 169 461**

**Description**

BACKGROUND OF THE INVENTION

This invention generally relates to power distribution networks, and in particular, to systems, methods, and apparatus for integrated volt/VAR control in power distribution networks.

Electric distribution grids (including microgrids) are typically operated with a number of constraints that allow delivery of power at a certain quality and reliability level. A goal associated with operating a power distribution network, for example, is establishing acceptable voltage conditions for all customers while delivering power as efficiently as possible. In many power distribution networks, the voltage profile along the distribution feeder and the flow of reactive power (also known as VARs) on the feeder are typically maintained by a combination of voltage regulators and switched capacitor banks installed at various locations on the feeder and in its associated substation.

Large distribution systems may include microgrids and non-microgrid branches. A microgrid typically includes localized groupings of loads, generation sources, and storage devices that are connected to a traditional centralized grid, or macrogrid. Optimizing an entire feeder network, including microgrids, and coordinating voltage and volt-amps-reactive (VAR) control can be a formidable task, particularly when network conditions change. Traditionally, feeder voltage regulators and switched capacitor banks are operated as independent devices, with no direct coordination between the individual controllers. Such an approach can be effective for maintaining acceptable voltage and reactive power flow near the controllers, but typically does not produce optimal results for the entire feeder.

BRIEF SUMMARY OF THE INVENTION

Some or all of the above needs may be addressed by certain embodiments of the invention. Certain embodiments of the invention may include systems, methods, and apparatus for integrated volt/VAR control in power distribution networks.

According to an example embodiment of the invention, a method is provided for controlling voltage and reactive power in a distribution network. The method includes estimating at least one present state associated with a distribution network; allocating one or more load zones in the distribution network; predicting load profiles of each zone for a predetermined time period; determining capacitor bank switching schedules for a predetermined time period based at least in part on the at least one present state and the predicted load profiles; switching capacitor banks according to the capacitor bank switching schedules; running a power flow algorithm to determine the predicted voltages over all nodes in a zone based at least in part on the predicted load profiles; determining an initial set of voltage regulator tap settings that flattens the predicted average voltage of all nodes in a zone over a given time period based at least in part on a linear relation between tap ratios and voltages; determining a final set of voltage regulator tap settings based on a dynamic programming algorithm; determining voltage regulator switching schedules based at least in part on one or more of the initial or final voltage regulator tap settings; and switching the voltage regulator tap settings according to the voltage regulator switching schedules.

According to another example embodiment, a system is provided. The system includes at least one power distribution network comprising one or more switchable capacitor banks and one or more adjustable voltage regulators. The system also includes at least one memory for storing data and computer-executable instructions; and at least one processor configured to access the at least one memory and further configured to execute the computer-executable instructions for controlling voltage and reactive power (VARs) in the distribution network by: estimating at least one present state associated with a distribution network; allocating one or more load zones in the distribution network; predicting load profiles of each zone for a predetermined time period; determining capacitor bank switching schedules for a predetermined time period based at least in part on the at least one present state and the predicted load profiles; switching capacitor banks according to the capacitor bank switching schedules; running a power flow algorithm to determine the predicted voltages over all nodes in a zone based at least in part on the predicted load profiles; determining an initial set of voltage regulator tap settings that flattens the predicted average voltage of all nodes in a zone over a given time period based at least in part on a linear relation between tap ratios and voltages; determining a final set of voltage regulator tap settings based on a dynamic programming algorithm; determining voltage regulator switching schedules based at least in part on one or more of the initial or final voltage regulator tap settings; and switching the voltage regulator tap settings according to the voltage regulator switching schedules.

According to another example embodiment, an apparatus is provided. The apparatus includes at least one memory for storing data and computer-executable instructions; and at least one processor configured to access the at least one memory and further configured to execute the computer-executable instructions for controlling voltage and reactive power (VARs) in the distribution network by: estimating at least one present state associated with a distribution network; allocating one or more load zones in the distribution network; predicting load profiles of each zone for a predetermined time period; determining capacitor bank switching schedules for a predetermined time period based at least

EP 2 521 237 B1

in part on the at least one present state and the predicted load profiles; switching capacitor banks according to the capacitor bank switching schedules; running a power flow algorithm to determine the predicted voltages over all nodes in a zone based at least in part on the predicted load profiles; determining an initial set of voltage regulator tap settings that flattens the predicted average voltage of all nodes in a zone over a given time period based at least in part on a linear relation between tap ratios and voltages; determining a final set of voltage regulator tap settings based on a dynamic programming algorithm; determining voltage regulator switching schedules based at least in part on one or more of the initial or final voltage regulator tap settings; and switching the voltage regulator tap settings according to the voltage regulator switching schedules.

Other embodiments and aspects of the invention are described in detail herein and are considered a part of the claimed inventions. Other embodiments and aspects can be understood with reference to the following detailed description, accompanying drawings, and claims.

## BRIEF DESCRIPTION OF THE FIGURES

Reference will now be made to the accompanying tables and drawings, which are not necessarily drawn to scale, and wherein:

FIG. 1 is a block diagram of an illustrative state estimation and integrated volt/VAR control engine, according to an example embodiment of the invention.

FIG. 2 is a block diagram of an illustrative example network, according to an example embodiment of the invention.

FIG. 3 is a block diagram of an illustrative example system, according to an example embodiment of the invention.

FIG. 4 is a flow diagram of an example method according to an example embodiment of the invention.

FIG. 5 is a flow diagram of another example method according to an example embodiment of the invention.

## DETAILED DESCRIPTION OF EMBODIMENTS OF THE INVENTION

In many power distribution networks, the voltage profile along the distribution feeder and the flow of reactive power (also known as VARs) on the feeder have traditionally been maintained by a combination of voltage regulators, switched capacitor banks, and load tap changers installed at various locations on the feeder and in its associated substation. Such devices have traditionally utilized fixed operational schedules, for example, based on the time of day or other local parameters. The resulting operations have been disjointed from one another, resulting in a decreased overall effectiveness of operation. Example embodiments of this invention present an approach to realize an integrated control and operation of these devices. Example embodiments of the invention may enable a more optimal operation of the distribution grid with a much faster computational time to determine a solution of the optimization problem. Example embodiments my utilize multiple algorithms to determine the optimum switching schedules, regulation, and coordination of the various voltage regulators, switched capacitor banks, and/or load tap changers associated with the power distribution system.

According to an example embodiment, the volt/volts-amps-reactive (VAR) optimization begins with distribution state estimation and load allocation to different zones/nodes of the network. In an example embodiment, a load forecasting model, based on pertinent system data and distribution system knowledge, is then used to predict the load for the next N hours of time period. According to an example embodiment, a integrated volt/VAR control (IVVC) engine may be utilized to solve a "Knapsack" problem to utilize information about the present states of the system and the forecasted reactive load to develop schedules for settings and switching states for the devices over a predetermined time period. The Knapsack problem may be defined as follows: suppose that a hitch-hiker has to fill up his knapsack (reactive power at the substation) by selecting among a fmite number of objects (capacitor banks). Each object has weight or size and value (VAR). The hitch-hiker wants to maximize (minimize) the overall value of the objects in (the system power loss) the knapsack while keeping the overall weight below (above) a certain level (required reactive support).

In an example embodiment, finding an optimum solution to the Knapsack problem may be utilized as a new capacitor bank switching schedule and may provide input to the voltage regulator portion of the IVVC engine. According to an example embodiment, constraints on the number of device operations, voltage/current limits, etc. may be respected while formulating the switching states of the voltage regulator control devices.

In an example embodiment, an initial set of voltage regulator tap settings that flattens the predicted average voltage over all nodes in a zone over a given time period (i.e., 24 hours) may be determined by assuming a linear relation between tap ratios and voltages and taking advantage of tree-like structure of distribution networks. For example, changes at the regulator may propagate to the child nodes and may eventually change the average voltage over all nodes. According to an example embodiment, the term "flattening," as used herein, relates to the network's time varying voltage change, which is related to the change in the load. For example, the load curve shape over a day may have the appearance of a mountain peaking around noon, and with constant current, the increased load may reduce the voltage, so that voltage curve looks like a valley. In an example embodiment of the invention, the tap ratio may be changed to "flatten" the voltage valley and provide a more steady average voltage, even as the load increases.

In accordance with example embodiments of the invention, optimal control of reactive power flow for improvements in the voltage profiles and for real power loss minimization may utilize real-time scheduling of device settings. According to an example embodiment, life degradation that occurs when the devices are switched frequently may be taken into account. In an example embodiment, a daily schedule may require running optimization algorithms as required to adjust future settings based on errors in the load forecast; however, the lifetime of a capacitor or voltage regulator may be dependent on the number of switching operations performed. For example, a capacitor bank is typically designed so that it can withstand 40,000-50,000 on/off switching cycles, which equates to a 20-year life, but if the controls for the cap bank allow this number of switching operations to occur over a six-year period, then the lifetime will be correspondingly reduced. According to an example embodiment, local or global control algorithms resulting in frequent switching of device setting are likely to be discarded in an attempt to prevent premature device failure. In an example embodiment, the IVVC may minimize the number of switching cycles while improving the power factor and/or minimizing losses.

According to an example embodiment of the invention, forecasting may be applied to minimize capacitor switching cycles. According to an example embodiment, a model of the distribution network may be applied to estimate the behavior of the network as though it were driven by the forecasted load. In an example embodiment, the impact of non-linearities may be estimated, and may be used to predict the behavior of dependent variables (i.e. outputs: node voltages, losses) of the modeled dynamic distribution network with respect to changes in the independent variables (i.e. control device settings).

According to an example embodiment, the algorithm for scheduling may run fast enough to provide updates in about 5 to about 15 minutes for large radial distribution networks. In an example embodiment, a coordinated optimized IVVC algorithm may be utilized that is computationally efficient at the expense of the global optimality (an approximate solution to the minimum cost of the objective function) for large radial distribution networks (e.g., those which contains thousands of nodes, tens of cap banks, and tens of load tap changers/ voltage regulators.

Several factors may contribute to the increased efficiency of the example approach compared to dynamic programming of or genetic algorithms. First, according to an example embodiment, optimization of discrete capacitors and voltage regulators may be considered as separate but dependent problems. According to an example embodiment, modularity of the algorithms for different types of control devices may be applied to provide flexibility and to allow integration with other more optimal but less efficient algorithms as needed. In an example embodiment, the integrated algorithm may provide an optimal daily schedule for capacitor banks based on minimizing the total VARs at the head of the distribution substation. According to an example embodiment, the capacitor banks settings may be used to determine tap settings based on leveling the average voltage, and setting the average voltage to achieve some level of objective function cost minimization within appropriate sections of the distribution network.

Embodiments of the invention will be described more fully hereinafter with reference to the accompanying drawings, in which embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

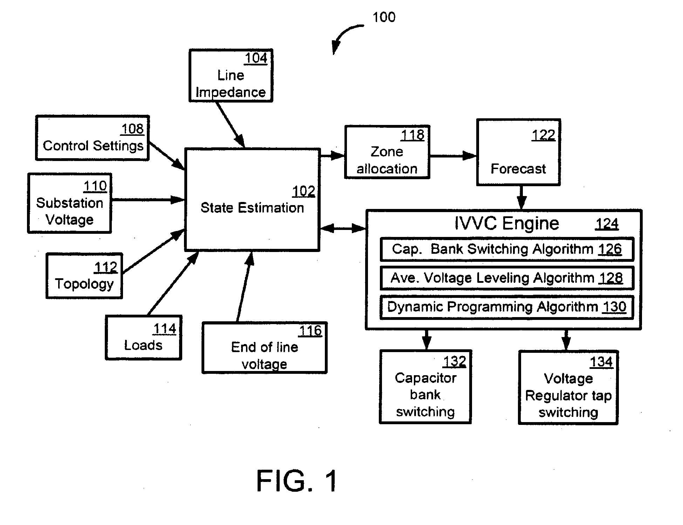

FIG. 1 illustrates an example system 100 for optimizing the switching of capacitor banks 132 and for setting voltage regulator taps 134. According to an example embodiment, a state estimator 102 may be utilized to determine conditions associated with the power distribution network. According to an example embodiment, information such as line impedance 104, control settings 108, substation voltage 110, topology 112, loads 114, and/or end of line voltage 116 may be utilized by the state estimation block to determine the state of the network. In an example embodiment, the state estimator 102 may communicate with the IVVC engine 124 directly, or via additional intermediate blocks. For example, a zone allocation block 118 and/or a forecast block 122 may be utilized to customize the state estimation information for certain regions or zones of the network and/or certain periods in the future.

According to an example embodiment, the system 100 may include an IVVC engine 124, that may utilize a capacitor bank switching algorithm 126, an average voltage leveling or flattening algorithm 128, and/or a dynamic programming (DP) algorithm 130. According to an example embodiment, the IVVC engine 124, together with the associated blocks, may be utilized for optimizing the switching of capacitor banks 132 and for setting voltage regulator taps

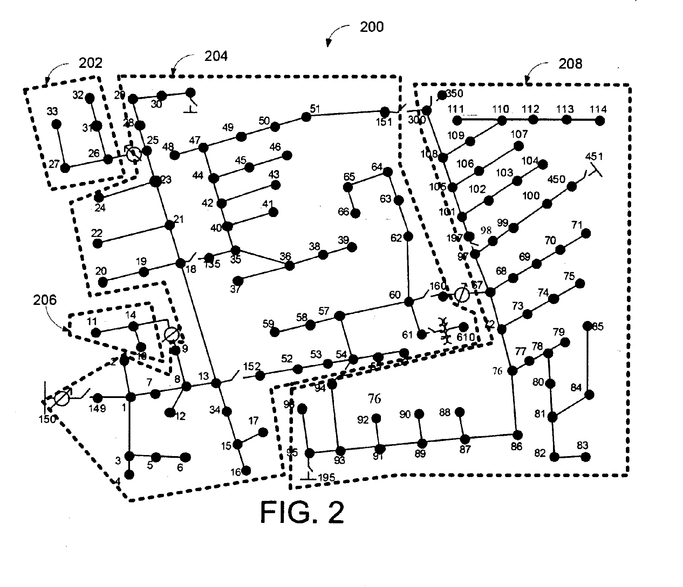

FIG. 2 depicts an example distribution network 200, according to an example embodiment of the invention. According to an example embodiment, the network 200 may include several microgrids, 202, 204, 206, and 208. In an example embodiment, the microgrids may be associated with the rest of the network, and attached with voltage regulators.

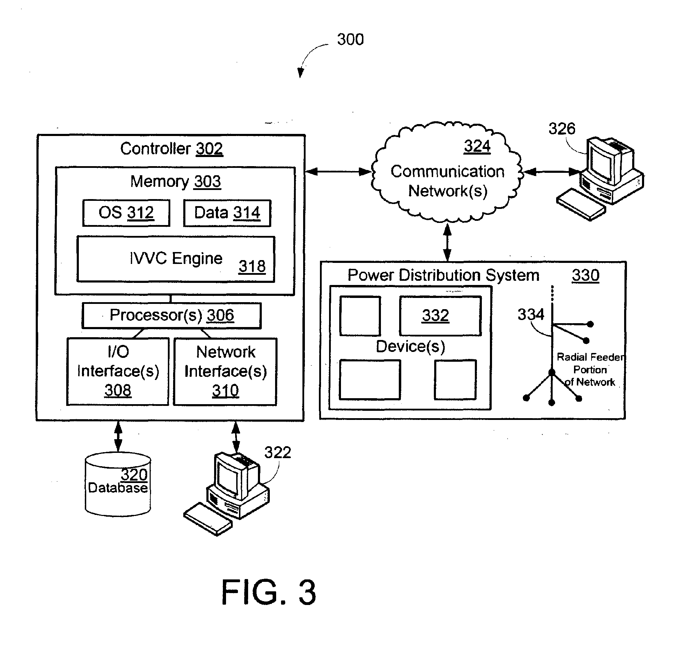

FIG. 3 depicts an example reduction processing system 300, according to an example embodiment of the invention. For example, the system 200 may include a controller 302. In an example embodiment, the controller 302 may include a memory 303, one or more processors 306, one or more input/output interfaces 308, and/or one or more network interfaces 310. In an example embodiment, the memory may include an operating system 312, data 314, and an IVVC engine module 318 (as in 124 of FIG. 1). According to an example embodiment, the system 300 may include a database 320 and/or a local workstation/display 322, operable for communication with the controller 302. In an example embodiment, the controller 302 may communicate with a power distribution system 330 via a communications network 324. According to an example embodiment, the power distribution system 330 may include devices 332, such as capacitor banks, voltage regulators, etc. In an example embodiment, the power distribution system 330 may include portions of the network 334, including radial feeders. In an example embodiment, a remote workstation/display may be in communication with the power distribution system 330 and /or the controller 302.

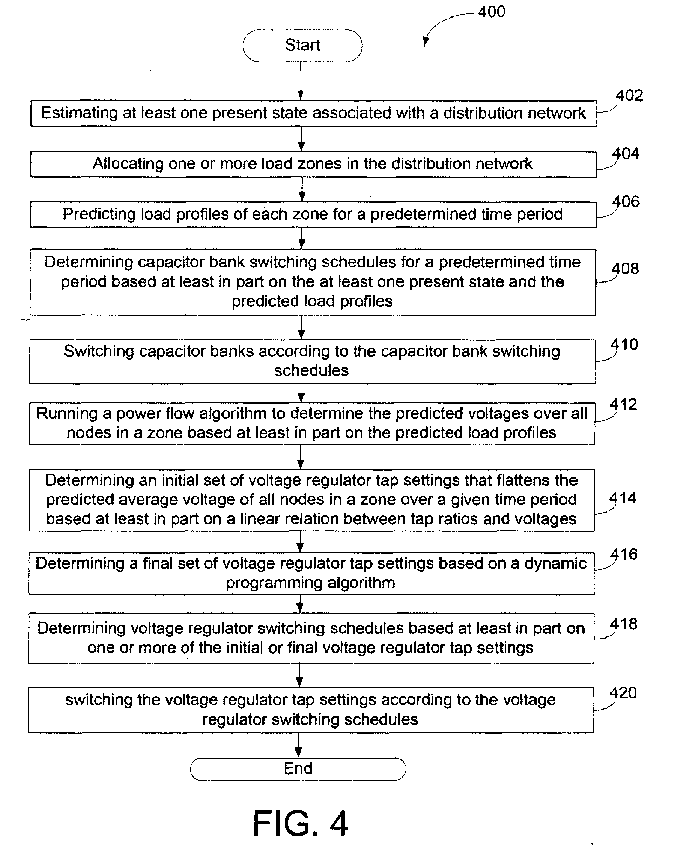

FIG. 4 shows an example flow diagram of a method 400, according to an example embodiment of the invention. The method 400 starts in block 402 and according to an example embodiment, includes estimating at least one present state associated with a distribution network. In block 404, the method 400 includes allocating one or more load zones in the distribution network. In block 406, the method 400 includes predicting load profiles of each zone for a predetermined time period. In block 408, the method 400 includes determining capacitor bank switching schedules for a predetermined time period based at least in part on the at least one present state and the predicted load profiles. In block 410, the method 400 includes switching capacitor banks according to the capacitor bank switching schedules. In block 412, the method 400 includes running a power flow algorithm to determine the predicted voltages over all nodes in a zone based at least in part on the predicted load profiles. In block 414, the method 400 includes determining an initial set of voltage regulator tap settings that flattens the predicted average voltage of all nodes in a zone over a given time period based at least in part on a linear relation between tap ratios and voltages. In block 416, the method 400 includes determining a final set of voltage regulator tap settings based on a dynamic programming algorithm. In block 418, the method 400 includes determining voltage regulator switching schedules based at least in part on one or more of the initial or final voltage regulator tap settings. In block 420, the method 400 includes switching the voltage regulator tap settings according to the voltage regulator switching schedules. The method 400 ends after block 420.

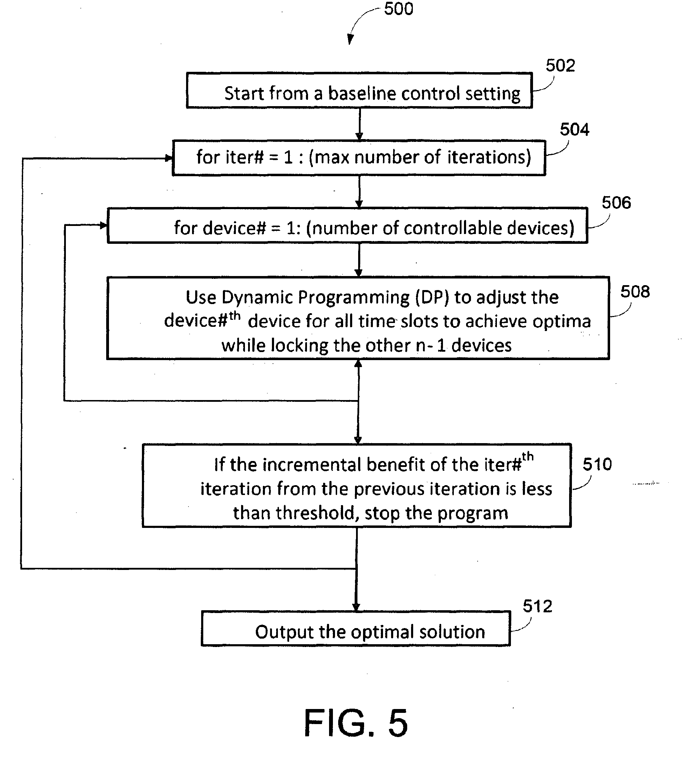

FIG. 5 depicts an example use of a dynamic programming (DP) algorithm for controlling devices in the network. According to an example embodiment, the voltage regulator tap settings may be set using a DP algorithm. In an example embodiment, DP is an optimization method that may be used for generation unit commitment. For example, unit commitment may involve scheduling available generation units (for example, which locations should be receiving power and which locations should not) in a power system for the next N hours (for example, 8 hours) to both meet the load requirements and to achieve the minimum total operational cost.

According to an example embodiment, the dynamic programming may be described as follows: for the Kth hour, there are a limited number of unit combinations, and a minimum cost up to this hour since the 1st hour is desired to be calculated. The following equation may be utilized:

$$Fcost(K,I) = min[\ Pcost(K,I) + Scost(K\text{-}1,L\text{:}K,I) + Fcost(K\text{-}1,L)],$$

where "K" is the hour number, "I" and "L" represent two different unit combinations, Fcost(K,I) represents the accumulated total cost in the Kth hour when combination "I" is used in this hour, Fcost(K-1,L) represents the accumulated total cost during the previous hour (K-1) when combination "L" was used, Scost(K-1,L:K,I) represents the cost associated with the transition from combination "L" in the new combination "I", and Pcost(K,I) means the cost that will occur in this Kth hour due to the operation with combination "I". In an example embodiment, for each possible combination "I", its associated accumulated cost Fcost(K,I) is evaluated given that Fcost(K-1,L) is already available. According to an example embodiment, this evaluation continues until the final hour is reached.

According to an example embodiment involving IVVC optimization, a similar DP process, as described above may be utilized for scheduling of all available units (e.g., capacitor banks, voltage regulators) for the next N hours to achieve the optimal system performance (e.g., minimum total energy loss). According to an example embodiment, in each hour there are a number of possible scheduling combinations. In an example embodiment, versions of the DP algorithm may be utilized to address certain special features of the IVVC problem. For example, the IVVC algorithm 500, as shown in FIG. 5 may include the DP to find an optimal solution. According to an example embodiment, the algorithm 500 may start in block 502 from a baseline control setting. An outer loop may then include blocks 504, 506, 508, and 510, with an inner loop including blocks 506 and 508. For example, the outer loop may iterate over "i"- the maximum number of iteration for the algorithm, and the inner loop may iterate over "j" - the number of controllable devices. In an example embodiment, in 508, DP may be used to adjust the jth device for all time slots to achieve optima while locking all of the other N-1 devices. Then in block 510, and according to an example embodiment, the incremental benefit of the ith iteration from the previous iteration may be evaluated, and if it is less than a predetermined threshold, then the algorithm 500 may stop and output an optimal solution in block 512.

According to example embodiments of the invention, expert knowledge may be used in the DP method to limit the number of states to search in each stage. For example, the tap positions of a tap changer may be confined to 9 positions around the "should-be" position based on the actual load condition (whereas the total number of states for each tap changer may be 33 otherwise). According to an example embodiment, a load flow may be determined before every DP to acquire a basic idea of the "should-be" tap position. For example, a tap position too far away from the "should-be" position may result in voltage violations, and may not be preferred. According to an example embodiment, a memory size of 6 may provide an optimal use of memory space. According to an example embodiment, in each iteration, the order of adjusting devices may be randomly generated to avoid being trapped in a limit cycle.

Accordingly, example embodiments of the invention can provide the technical effects of creating integrated volt/VAR control in power distribution networks that can minimize line losses. Example embodiments of the invention can also provide the technical effects of creating certain systems, methods, and apparatus that can minimize load through conservation voltage reduction. Example embodiments of the invention can also provide the technical effects of creating certain systems, methods, and apparatus that can increase power factor greater than about 0.98 and flatten /adjust voltage to desired setting.

In example embodiments of the invention, the integrated volt/VAR control system 100 and the reduction processing system 300 may include any number of hardware and/or software applications that are executed to facilitate any of the operations.

In example embodiments, one or more I/O interfaces may facilitate communication between integrated volt/VAR control system 100 and the reduction processing system 300 and one or more input/output devices. For example, a universal serial bus port, a serial port, a disk drive, a CD-ROM drive, and/or one or more user interface devices, such as a display, keyboard, keypad, mouse, control panel, touch screen display, microphone, etc., may facilitate user interaction with the integrated volt/VAR control system 100 and the reduction processing system 300. The one or more I/O interfaces may be utilized to receive or collect data and/or user instructions from a wide variety of input devices. Received data may be processed by one or more computer processors as desired in various embodiments of the invention and/or stored in one or more memory devices.

One or more network interfaces may facilitate connection of the integrated volt/VAR control system 100 and the reduction processing system 300 inputs and outputs to one or more suitable networks and/or connections; for example, the connections that facilitate communication with any number of sensors associated with the system. The one or more network interfaces may further facilitate connection to one or more suitable networks; for example, a local area network, a wide area network, the Internet, a cellular network, a radio frequency network, a Bluetooth™ (owned by Telefonaktiebolaget LM Ericsson) enabled network, a Wi-Fi™ (owned by Wi-Fi Alliance) enabled network, a satellite-based network any wired network, any wireless network, etc., for communication with external devices and/or systems.

As desired, embodiments of the invention may include the integrated volt/VAR control system 100 and the reduction processing system 300 with more or less of the components illustrated in FIGs. 1 and 3.

Certain embodiments of the invention are described above with reference to block and flow diagrams of systems, methods, apparatuses, and/or computer program products according to example embodiments of the invention. It will be understood that one or more blocks of the block diagrams and flow diagrams, and combinations of blocks in the block diagrams and flow diagrams, respectively, can be implemented by computer-executable program instructions. Likewise, some blocks of the block diagrams and flow diagrams may not necessarily need to be performed in the order presented, or may not necessarily need to be performed at all, according to some embodiments of the invention.

These computer-executable program instructions may be loaded onto a general-purpose computer, a special-purpose computer, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable memory that can direct a computer or other programmable data processing apparatus to function in a particular manner, such that the instructions stored in the computer-readable memory produce an article of manufacture including instruction means that implement one or more functions specified in the flow diagram block or blocks. As an example, embodiments of the invention may provide for a computer program product, comprising a computer-usable medium having a computer-readable program code or program instructions embodied therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, can be implemented by special-purpose, hardware-based computer systems that perform the specified functions, elements or steps, or combinations of special-purpose hardware and computer instructions.

While certain embodiments of the invention have been described in connection with what is presently considered to be the most practical and various embodiments, it is to be understood that the invention is not to be limited to the disclosed embodiments, but on the contrary, is intended to cover various modifications and equivalent arrangements included within the scope of the appended claims. Although specific terms are employed herein, they are used in a generic and descriptive sense only and not for purposes of limitation.

This written description uses examples to disclose certain embodiments of the invention, including the best mode, and also to enable any person skilled in the art to practice certain embodiments of the invention, including making and using any devices or systems and performing any incorporated methods. The patentable scope of certain embodiments of the invention is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

**Claims**

1. A method for controlling voltage and reactive power in a distribution network, the method comprising:

   estimating at least one present state associated with a distribution network (330);
   allocating one or more load zones in the distribution network (330);
   predicting load profiles of each zone for a predetermined time period;
   determining capacitor bank (332) switching schedules for a predetermined time period based at least in part on the at least one present state and the predicted load profiles;
   switching capacitor banks (332) according to the capacitor bank switching schedules;
   running a power flow algorithm to determine the predicted voltages over all nodes in a zone based at least in part on the predicted load profiles;
   determining an initial set of voltage regulator tap settings that flattens the predicted average voltage of all nodes in a zone over a given time period based at least in part on a linear relation between tap ratios and voltages;
   determining a final set of voltage regulator tap settings based on a dynamic programming algorithm;
   determining voltage regulator switching schedules based at least in part on one or more of the initial or final voltage regulator tap settings; and
   switching the voltage regulator tap settings according to the voltage regulator switching schedules.

2. The method of claim 1, wherein estimating the at least one present state comprises estimating at least one of voltage, power factor or reactive loads at nodes of the distribution network (330).

3. The method of claim 1 or claim 2, wherein allocating one or more load zones comprises grouping nodes by control sub-systems.

4. The method of claim 1, 2 or 3, wherein the one or more load zones are treated as nodes for predicting load profiles.

5. The method of any one of claims 1 to 4, wherein predicting the load profiles of each zone is based at least in part on a load forecasting model.

6. The method of any one of claims 1 to 5, further comprising:

   updating estimates of the at least one present state;
   updating capacitor bank (332) switching schedules; and
   updating voltage tap setting switching schedules;

7. The method of any one of claims 1 to 6, wherein determining capacitor bank (332) switching schedules is further based at least in part on one of device operation frequency, device volt-amps reactive (VARs), network voltage limits, and network VAR deficit.

8. The method of any one of claims 1 to 7, wherein determining voltage regulator switching schedules is further based at least in part on a dynamic programming algorithm and on one or more of device operation frequency, network voltage limits, or leveling the average voltage level in at least one control sub-system.

9. An apparatus comprising:

   at least one memory (303) for storing data and computer-executable instructions; and
   at least one processor (306) configured to access the at least one memory (303) and further configured to execute the computer-executable instructions for performing the method of any one of the preceding claims.

10. A system comprising:

   at least one power distribution network (330) comprising one or more switchable capacitor banks and one or more adjustable voltage regulators (332); and
   at least one memory (303) for storing data and computer-executable instructions; and at least one processor (306) configured to access the at least one memory (303) and further configured to execute the computer-executable instructions for controlling voltage and reactive power (VARs) in the distribution network (330) by:

      estimating at least one present state associated with a distribution network (330);
      allocating one or more load zones in the distribution network (330);
      predicting load profiles of each zone for a predetermined time period;
      determining capacitor bank (332) switching schedules for a predetermined time period based at least in part on the at least one present state and the predicted load profiles;
      switching capacitor banks (332) according to the capacitor bank switching schedules;
      running a power flow algorithm to determine the predicted voltages over all nodes in a zone based at least in part on the predicted load profiles;
      determining an initial set of voltage regulator tap settings that flattens the predicted average voltage of all nodes in a zone over a given time period based at least in part on a linear relation between tap ratios and voltages determining a final set of voltage regulator tap settings based on a dynamic programming algorithm;
      determining voltage regulator switching schedules based at least in part on one or more of the initial or final voltage regulator tap settings; and
      switching the voltage regulator tap settings according to the voltage regulator switching schedules.

11. The system of claim 10, wherein estimating the at least one present state comprises estimating at least one of voltage, power factor or reactive loads at nodes of the distribution network (330).

12. The system of claim 10 or claim 11, wherein allocating one or more load zones comprises grouping nodes by control sub-systems.

13. The system of claim 10, 11 or 12, wherein the one or more load zones are treated as nodes for predicting the load profiles, and/or wherein predicting the load profiles is based at least in part on a load forecasting model.

14. The system of any one of claims 10 to 13, further comprising updating estimates of the at least one present state and updating capacitor bank switching schedules.

15. The system of any one of claims 10 to 14, wherein determining capacitor bank switching schedules is further based at least in part on one or more of device operation frequency, device volt-amp reactive (VAR), network voltage limits, or network VAR deficit, and/or wherein determining voltage regulator switching schedules is further based at least in part on a dynamic programming algorithm and on one or more of device operation frequency, network voltage limits, or leveling the average voltage level in at least one control sub-system.

**Patentansprüche**

1. Verfahren zur Steuerung von Spannung und Blindleistung in einem Verteilernetz, wobei das Verfahren Folgendes umfasst:

   das Schätzen wenigstens eines momentanen Zustands, der mit einem Verteilernetz (330) verknüpft ist;

das Zuteilen einer oder mehrerer Lastzonen im Verteilernetz (330);

das Prognostizieren von Lastprofilen für jede Zone für einen vorbestimmten Zeitraum;

das Bestimmen von Kondensatorbank- (332) Ansteuerungsplanungen für einen vorbestimmten Zeitraum wenigstens zum Teil auf Basis des wenigstens einen momentanen Zustands und der prognostizierten Lastprofile;

das Ansteuern von Kondensatorbänken (332) gemäß den Kondensatorbank-Ansteuerungsplanungen;

den Einsatz eines Leistungsflussalgorithmus, um die prognostizieren Spannungen über allen Knoten in einer Zone wenigstens zum Teil auf Basis der prognostizierten Lastprofile zu bestimmen;

das Bestimmen eines anfänglichen Satzes von Spannungsregler-Abgriffeinstellungen, der die prognostizierte durchschnittliche Spannung aller Knoten in einer Zone über einen gegebenen Zeitraum wenigstens zum Teil auf Basis einer linearen Beziehung zwischen den Abgriffverhältnissen und den Spannungen abflacht;

das Bestimmen eines letzten Satzes von Spannungsregler-Abgriffeinstellungen auf Basis eines dynamischen Programmalgorithmus;

das Bestimmen von Spannungsregler-Ansteuerungsplanungen wenigstens zum Teil auf Basis einer oder mehrerer der anfänglichen oder letzten Spannungsregler-Abgriffeinstellungen; und

das Ansteuern der Spannungsregler-Abgriffeinstellungen gemäß den Spannungsregler-Ansteuerungsplanungen.

2. Verfahren nach Anspruch 1, wobei das Schätzen des wenigstens einen momentanen Zustands das Schätzen von wenigstens einem der Folgenden umfasst: Spannung, Leistungsfaktor oder Blindlasten an Knoten des Verteilernetzes (330).

3. Verfahren nach Anspruch 1 oder 2, wobei das Zuteilen einer oder mehrerer Lastzonen das Gruppieren von Knoten durch Steuerungs-Subsysteme umfasst.

4. Verfahren nach Anspruch 1, 2 oder 3, wobei die eine oder die mehreren Lastzonen als Knoten für das Prognostizieren von Lastprofilen behandelt werden.

5. Verfahren nach einem der Ansprüche 1 bis 4, wobei das Prognostizieren der Lastprofile jeder Zone wenigstens zum Teil auf einem Last-Vorhersagemodell basiert.

6. Verfahren nach einem der Ansprüche 1 bis 5, das weiterhin Folgendes umfasst:

das Aktualisieren von Schätzungen des wenigstens einen momentanen Zustands;

das Aktualisieren von Kondensatorbank- (332) Ansteuerungsplanungen; und

das Aktualisieren von Spannungsabgriff-Ansteuerungsplanungen.

7. Verfahren nach einem der Ansprüche 1 bis 6, wobei das Bestimmen von Kondensatorbank- (332) Ansteuerungsplanungen weiterhin wenigstens zum Teil auf einem von Folgenden basiert: Betriebsfrequenz der Einrichtung, Blindleistung (VAR) der Einrichtung, Spannungsgrenzwerte des Netzes oder Blindleistungsdefizit des Netzes.

8. Verfahren nach einem der Ansprüche 1 bis 7, wobei das Bestimmen der Spannungsregler-Ansteuerungsplanungen weiterhin wenigstens zum Teil auf einem dynamischen Programmalgorithmus und auf einem oder mehreren von Folgenden basiert: Betriebsfrequenz der Einrichtung, Spannungsgrenzwerte des Netzes oder Einstellung des durchschnittlichen Spannungspegels in wenigstens einem Steuerungs-Subsystem.

9. Vorrichtung, die Folgendes umfasst:

wenigstens einen Speicher (303) zum Speichern von Daten und computerausführbaren Befehlen; und

wenigstens einen Prozessor (306), der dazu ausgelegt ist, auf den wenigstens einen Speicher (303) zuzugreifen, und der weiterhin dazu ausgelegt ist, die computerausführbaren Befehle auszuführen, um das Verfahren nach einem der vorhergehenden Ansprüche durchzuführen.

10. System, das Folgendes umfasst:

wenigstens ein Energieverteilernetz (330), das eine oder mehrere schaltbare Kondensatorbänke und einen oder mehrere einstellbare Spannungsregler (332) umfasst; und

wenigstens einen Speicher (303) zum Speichern von Daten und computerausführbaren Befehlen; und wenigstens einen Prozessor (306), der dazu ausgelegt ist, auf den wenigstens einen Speicher (303) zuzugreifen, und der weiterhin dazu ausgelegt ist, die computerausführbaren Befehle auszuführen, um Spannung und Blindleistung (VAR) im Verteilernetz (330) durch Folgendes zu steuern:

das Schätzen wenigstens eines momentanen Zustands, der mit einem Verteilernetz (330) verknüpft ist;

die Zuteilung einer oder mehrerer Lastzonen im Verteilernetz (330);

das Prognostizieren von Lastprofilen für jede Zone für einen vorbestimmten Zeitraum;

das Bestimmen von Kondensatorbank- (332) Ansteuerungsplanungen für einen vorbestimmten Zeitraum wenigstens zum Teil auf Basis wenigstens eines momentanen Zustands und der prognostizierten Lastprofile;

das Ansteuern von Kondensatorbänken (332) gemäß den Kondensatorbank-Ansteuerungsplanungen;

den Einsatz eines Leistungsflussalgorithmus, um die prognostizieren Spannungen über allen Knoten in einer Zone wenigstens zum Teil auf Basis der prognostizierten Lastprofile zu bestimmen;

das Bestimmen eines anfänglichen Satzes von Spannungsregler-Abgriffeinstellungen, der die prognostizierte durchschnittliche Spannung aller Knoten in einer Zone über einen gegebenen Zeitraum wenigstens zum Teil auf Basis einer linearen Beziehung zwischen den Abgriffverhältnissen und den Spannungen abflacht;

das Bestimmen eines letzten Satzes von Spannungsregler-Abgriffeinstellungen auf Basis eines dynamischen Programmalgorithmus;

das Bestimmen von Spannungsregler-Ansteuerungsplanungen wenigstens zum Teil auf Basis einer oder mehrerer der anfänglichen oder letzten Spannungsregler-Abgriffeinstellungen; und

das Ansteuern der Spannungsregler-Abgriffeinstellungen gemäß den Spannungsregler-Ansteuerungsplanungen.

11. System nach Anspruch 10, wobei das Schätzen des wenigstens einen momentanen Zustands das Schätzen von wenigstens einem der Folgenden umfasst: Spannung, Leistungsfaktor oder Blindlasten an Knoten des Verteilernetzes (330).

12. System nach Anspruch 10 oder Anspruch 11, wobei das Zuteilen einer oder mehrerer Lastzonen das Gruppieren von Knoten durch Steuerungs-Subsysteme umfasst.

13. System nach Anspruch 10, 11 oder 12, wobei die eine oder die mehreren Lastzonen als Knoten für das Prognostizieren der Lastprofile behandelt werden und/oder wobei das Prognostizieren der Lastprofile wenigstens zum Teil auf einem Last-Vorhersagemodell basiert.

14. System nach einem der Ansprüche 10 bis 13, das weiterhin das Aktualisieren von Schätzungen des wenigstens einen momentanen Zustands und das Aktualisieren von Kondensatorbank-Ansteuerungsplanungen umfasst.

15. Verfahren nach einem der Ansprüche 10 bis 14, wobei das Bestimmen von Kondensatorbank-Ansteuerungsplanungen weiterhin wenigstens zum Teil auf einem oder mehreren von Folgenden basiert: Betriebsfrequenz der Einrichtung, Blindleistung (VAR) der Einrichtung, Spannungsgrenzwerte des Netzes oder Blindleistungsdefizit des Netzes, und/oder wobei das Bestimmen von Spannungsregler-Ansteuerungsplanungen weiterhin wenigstens zum Teil auf einem dynamischen Programmalgorithmus und auf einem oder mehreren von Folgenden basiert: Betriebsfrequenz der Einrichtung, Spannungsgrenzwerte des Netzes oder Einstellung des durchschnittlichen Spannungspegels in wenigstens einem Steuerungs-Subsystem.

## Revendications

1. Procédé de commande de tension et d'énergie réactive dans un réseau de distribution, le procédé comprenant les étapes consistant à :

estimer au moins un état présent associé à un réseau de distribution (330) ;

affecter une ou plusieurs zones de charge dans le réseau de distribution (330) ;

prédire des profils de charge de chaque zone sur une période de temps prédéterminée ;

déterminer des programmes de computation de batteries de condensateurs (332) sur une période de temps prédéterminée sur la base au moins en partie d'un état présent et des profils de charge prédits ;

commuter des batteries de condensateurs (332) selon les programmes de computation de batteries de condensateurs ;

faire tourner un algorithme d'écoulement d'énergie pour déterminer les tensions prédites sur tous les noeuds dans une zone sur la base au moins des profils de charge prédits ;

déterminer un ensemble initial de réglages de prises de régulateurs de tension qui égalisent la tension moyenne prédite de tous les noeuds dans une zone sur une période de temps donnée sur la base au moins en partie d'une relation linéaire entre les rapports de prises et les tensions ;

déterminer un ensemble final de réglages de prises de régulateurs de tension sur la base d'un algorithme de programmation dynamique ;

déterminer des programmes de computation de régulateurs de tension sur la base au moins en partie d'un ou plusieurs des réglages de prises de régulateurs de tension initiaux ou finals ; et commuter les réglages de prises de régulateurs de tension selon les programmes de computation de régulateurs de tension.

2. Procédé selon la revendication 1, dans lequel l'estimation du au moins un état présent comprend l'estimation d'au moins un élément entre la tension, le facteur de puissance ou les charges réactives aux noeuds du réseau de distribution (330).

3. Procédé selon la revendication 1 ou la revendication 2, dans lequel l'affectation d'une ou plusieurs zones de charge comprend le groupage de noeuds par des sous-systèmes de commande.

4. Procédé selon la revendication 1, 2 ou 3, dans lequel la une ou plusieurs zones de charge est ou sont traitées comme des noeuds pour prédire des profils de charge.

5. Procédé selon l'une quelconque des revendications 1 à 4, dans lequel la prédiction des profils de charge de chaque zone est basée au moins en partie sur un modèle de prévision de charge.

6. Procédé selon l'une quelconque des revendications 1 à 5, comprenant par ailleurs :

la mise à jour des estimations du au moins un état présent ;
la mise à jour des programmes de computation de batteries de condensateurs (332) ; et
la mise à jour des programmes de computation de réglages de prises de tension.

7. Procédé selon l'une quelconque des revendications 1 à 6, dans lequel la détermination de programmes de computation de batteries de condensateurs (332) est encore basée au moins en partie sur un élément entre la fréquence de fonctionnement de périphériques, les systèmes volts-ampères réactifs (VAR) de périphériques, les limites de tension du réseau et le déficit en VAR du réseau.

8. Procédé selon l'une quelconque des revendications 1 à 7, dans lequel la détermination des programmes de computation de régulateurs de tension est encore basée au moins en partie sur un algorithme de programmation dynamique et sur un ou plusieurs éléments entre la fréquence de fonctionnement de périphériques, les limites de tension du réseau ou le nivellement du niveau de tension moyen dans au moins un sous-système de commande.

9. Appareil comprenant :

au moins une mémoire (303) pour stocker des données et des instructions exécutables sur ordinateur ; et
au moins un processeur (306) configuré pour accéder à la au moins une mémoire (303) et configuré par ailleurs pour exécuter les instructions exécutables sur ordinateur afin d'effectuer le procédé selon l'une quelconque des revendications précédentes.

10. Système comprenant :

au moins un réseau de distribution d'énergie (330) comprenant une ou plusieurs batteries de condensateurs commutables et un ou plusieurs régulateurs de tension ajustables (332) ; et
au moins une mémoire (303) pour stocker des données et des instructions exécutables sur ordinateur ; et au moins un processeur (306) configuré pour accéder à la au moins une mémoire (303) et configuré en outre pour exécuter les instructions exécutables sur ordinateur afin de commander la tension et la puissance réactive (VAR) dans le réseau de distribution (330) :

en estimant au moins un état présent associé à un réseau de distribution (330) ;
en affectant une plusieurs zones de charge dans le réseau de distribution (330) ;

en prédisant des profils de charge de chaque zone sur une période de temps prédéterminée ;

en déterminant des programmes de computation de batteries de condensateurs (332) sur une période de temps prédéterminée sur la base au moins en partie du au moins un état présent et des profils de charge prédits ;

en commutant les batteries de condensateurs (332) selon les programmes de computation de batteries de condensateurs

en faisant tourner un algorithme d'écoulement d'énergie pour déterminer les tensions prédites sur tous les noeuds dans une zone basée au moins en partie sur les profils de charge prédits ;

en déterminant un ensemble initial de réglages de prises de régulateurs de tension qui égalisent la tension moyenne prédite de tous les noeuds dans une zone sur un période de temps donnée sur la base au moins en partie d'une relation linéaire entre les rapports de prises et les tensions ;

en déterminant un ensemble final de réglages de prises de régulateurs de tension sur la base d'un algorithme de programmation dynamique ;

en déterminant des programmes de commutation de régulateurs de tension sur la base au moins en partie d'un ou plusieurs des réglages de prises de régulateurs de tension initiaux ou finals ; et

en commutant les réglages de prises de régulateurs de tension selon les programmes de commutation de régulateurs de tension.

11. Système selon la revendication 10, dans lequel l'estimatîon du au moins un état présent comprend l'estimation d'au moins l'un des éléments entre la tension, le facteur de puissance ou les charges réactives au niveau des noeuds du réseau de distribution (330).

12. Système selon la revendication 10 ou la revendication 11, dans lequel l'affectation d'une ou plusieurs zones de charge comprend le groupage de noeuds par des sous-systèmes de commande.

13. Système selon la revendication 10, 11 ou 12, dans lequel la une ou plusieurs zones de charge est ou sont traitées comme des noeuds pour prédire les profils de charge et/ou dans lequel la prédiction des profils de charge est basée au moins en partie sur un modèle de prévision de charge.

14. Système selon l'une quelconque des revendications 10 à 13, comprenant en outre la mise à jour d'estimations du au moins un état présent et la mise à jour des programmes de computation de batteries de condensateurs.

15. Système selon l'une quelconque des revendications 10 à 14, dans lequel la détermination des programmes de computation de batteries de condensateurs est encore basée au moins en partie sur un ou plusieurs d'éléments entre la fréquence de fonctionnement de périphériques, le système tension-ampères réactifs (VAR) de périphériques, les limites de tension du réseau et le déficit en VAR du réseau et/ou dans lequel la détermination des programmes de computation de régulateurs de tension est encore basé au moins en partie sur un algorithme de programmation dynamique et sur un ou plusieurs d'éléments entre la fréquence de fonctionnement de périphériques, les limites de tension du réseau ou le nivellement du niveau de tension moyen dans au moins un sous-système de commende.

100

FIG. 1

FIG. 2

300

Controller 302

Memory 303

OS 312 | Data 314

IVVC Engine 318

Processor(s) 306

I/O Interface(s) 308 | Network Interface(s) 310

320 Database

322

324 Communication Network(s)

326

Power Distribution System 330

332 Device(s)

334

Radial Feeder Portion of Network

# FIG. 3

400

Start

Estimating at least one present state associated with a distribution network
402

Allocating one or more load zones in the distribution network
404

Predicting load profiles of each zone for a predetermined time period
406

Determining capacitor bank switching schedules for a predetermined time period based at least in part on the at least one present state and the predicted load profiles
408

Switching capacitor banks according to the capacitor bank switching schedules
410

Running a power flow algorithm to determine the predicted voltages over all nodes in a zone based at least in part on the predicted load profiles
412

Determining an initial set of voltage regulator tap settings that flattens the predicted average voltage of all nodes in a zone over a given time period based at least in part on a linear relation between tap ratios and voltages
414

Determining a final set of voltage regulator tap settings based on a dynamic programming algorithm
416

Determining voltage regulator switching schedules based at least in part on one or more of the initial or final voltage regulator tap settings
418

switching the voltage regulator tap settings according to the voltage regulator switching schedules
420

End

# FIG. 4

500

502
Start from a baseline control setting

504
for iter# = 1 : (max number of iterations)

506
for device# = 1: (number of controllable devices)

508
Use Dynamic Programming (DP) to adjust the device#$^{th}$ device for all time slots to achieve optima while locking the other n-1 devices

510
If the incremental benefit of the iter#$^{th}$ iteration from the previous iteration is less than threshold, stop the program

512
Output the optimal solution

# FIG. 5